# EUROPÄISCHE PATENTSCHRIFT

(11) **EP 3 349 950 B1**
(45) Veröffentlichungstag und Bekanntmachung des Hinweises auf die Patenterteilung: **20.02.2019**
(21) Anmeldenummer: 16777963.6
(22) Anmeldetag: 29.09.2016
(51) Int. Cl.: B25J 9/10

(54) **ROBOTER, XY-TISCH FÜR EINEN SOLCHEN ROBOTER UND LINEARES TRANSPORTSYSTEM**
ROBOTS, XY TABLE FOR A ROBOT OF THIS TYPE AND LINEAR TRANSPORT SYSTEM
ROBOT, TABLE XY POUR UN TEL ROBOT ET SYSTÈME DE TRANSPORT LINÉAIRE

(30) Priorität: 02.10.2015 DE 102015116808
(43) Veröffentlichungstag der Anmeldung: 25.07.2018
(73) Patentinhaber: Beckhoff Automation GmbH, 33415 Verl (DE)
(72) Erfinder: PRÜSSMEIER, Uwe, 32657 Lemgo (DE); MAIER, Clemens, 6700 Bludenz (AT); PEHLIVAN, Armin, 6714 Nüziders (AT); HENKE, Christian, 6800 Feldkirch (AT); SONDEREGGER, Stefan, 6714 Nüziders (AT); MORSCHER, Thomas, 1550 Wien (AT)
(74) Vertreter: Patentanwaltskanzlei WILHELM & BECK
(86) Internationale Anmeldenummer: PCT/EP2016/073266
(87) Internationale Veröffentlichungsnummer: WO 2017/055457

(56) Entgegenhaltungen:
- WO-A1-99/32256
- WO-A2-2005/110898
- CN-A- 103 308 338
- DE-A1-102013 206 125
- Uwe Prüssmeier: "XTS: Innovationspotenzial von der Motion-Aufgabe bis zum intelligenten Industrie-4.0-Element" In: "PC Control - The New Automation Technology Magazine", Juli 2015 (2015-07), Beckhoff Automation GmbH & Co. KG, XP055327045, Seiten Seite 18-Seite 21, Seite 19, linke Spalte, Absatz 2 Seite 19, rechte Spalte, Absätze 1,2 Abbildungen 2,3

## Beschreibung

Die Erfindung betrifft einen Roboter für ein lineares Transportsystem mit einer Schlitten-Führungsschiene, einen XY-Tisch für einen Roboter, ausgelegt zum Befahren einer Schlitten-Führungsschiene eines linearen Transportsystems, wobei die Schlitten-Führungsschiene einen Bogenabschnitt aufweist, und ein lineares Transportsystem umfassend eine Schlitten-Führungsschiene mit einem Bogenabschnitt und einen Roboter, der einen ersten und einen zweiten XY-Tisch umfasst.

Als Transportsysteme in der Produktion und Fertigung werden vermehrt lineare Antriebskonzepte eingesetzt, bei denen auf einem Verfahrweg mehrere Transportschlitten unabhängig voneinander gesteuert und bewegt werden können, wodurch sich eine hohe Flexibilität beim Produktionsfluss erreichen lässt. Bei der Auslegung von linearen Transportsystemen hat es sich als vorteilhaft erwiesen, den Verfahrweg aus bestrombaren Magnetfelderzeugern zu bilden, worauf die Transportschlitten passiv kabellos fahren. Ein solches lineares Transportsystem ist u.a. in der DE 10 2012 204 919 A1 beschrieben.

Bei linearen Transportsystemen ist jedoch nur eine Bewegung der Transportschlitten in Richtung des Verfahrweges möglich. In einem Produktions- und Fertigungsprozess ist jedoch zum Positionieren von Werkstücken in der Regel eine mehrdimensionale Bewegung, insbesondere im Bereich von Bearbeitungsstationen erforderlich. Zum Aus- und Einleiten von Werkstücke bei linearen Transportsystemen weisen die Bearbeitungsstationen deshalb Mehr-Achsen-Roboter auf, was jedoch sehr kostspielig ist.

Alternativ besteht auch die Möglichkeit, die Transportschlitten des linearen Transportsystems als Mehr-Achsen-Roboter auszuführen. Um einen Roboter, der eine mehrdimensionale Bewegung ausführen kann, auf einem Transportschlitten zu realisieren, ist es jedoch dann erforderlich, auf dem Transportschlitten zusätzliche Achsenantriebe vorzusehen. Dies hat jedoch dann zur Konsequenz, dass der Schlitten eine Energieeinspeisung braucht und nicht mehr passiv kabellos ausgeführt werden kann.

Aus der DE 101 28 185 B4, der JP 2011-125950 und der DE 10 2012 201 059 A1 sind jeweils Handhabungseinrichtungen für ein lineares Transportsystem bekannt, die zwei gelenkig miteinander verbundene Armsysteme aufweisen, wobei jedem Armsystem ein Schlitten zugeordnet ist, wobei die Schlitten unabhängig voneinander gesteuert und bewegt werden können. Durch synchrones Verfahren der beiden Schlitten kann die Handhabungseinrichtung in x-Richtung entlang der Schlitten-Führungsschiene verschoben werden. Über eine Relativbewegung der beiden Schlitten zueinander, bei der der Abstand zwischen den Schlitten verändert wird, kann dann die Handhabungseinrichtung zusätzlich eine Bewegung senkrecht zur Schlitten-Führungsschiene in z-Richtung ausführen. Die Bewegung des Roboters ist jedoch auf zwei Richtungen, die x- und z-Richtung beschränkt.

Um ein Positionieren des Roboters auch in die dritte Raumrichtung, die y-Richtung zu ermöglichen, wird in der DE 195 25 482 A1 vorgeschlagen, parallel zur Schlitten-Führungsschiene eine weitere Schlitten-Führungsschiene vorzusehen, auf der ein weiterer Schlitten, der ein weiteres mit den beiden anderen Armsystemen gekoppeltes Armsystem trägt, verfahren werden kann. Mit dieser Auslegung besteht die Möglichkeit, eine dreidimensionale Bewegung des Roboters auszuführen.

Aus der DE 10 2013 206 125 A1 ist ein Roboter für ein lineares Transportsystem mit Schlitten-Führungsschienen bekannt, der vier Schlitten, die unabhängig voneinander beweglich an den Schlitten-Führungsschienen angeordnet sind, und vier Arme, die über ein Gelenksystem miteinander verbunden sind, umfasst. Jeder Arm ist mit einem entsprechenden Schlitten über ein Gelenk verbunden. Weiterhin ist ein Arbeitswerkzeug mit dem Gelenksystem verbunden.

Aus dem Artikel: "XTS: Innovationspotenzial von der Motion-Aufgabe bis zum intelligenten Industrie-4.0-Element" - Juli 2015, veröffentlicht von Beckhoff Automation GmbH & Co. KG in: "PC Control - The New Automation Technology Magazine", Seiten 18 bis 21 ist ein XY-Tisch mit einem ersten und einem zweiten Schlitten, die unabhängig voneinander beweglich an der Schlitten-Führungsschiene angeordnet sind und einer ersten und einer zweiten Linearführung, die jeweils ein erstes und ein zweites Führungselement aufweisen, die entlang einer Bahn gegeneinander verschiebbar sind, wobei die erste und die zweite Linearführung mit einem Winkelversatz zueinander ausgeführt sind, bekannt. Die ersten Führungselemente der ersten und zweiten Linearführung sind über eine Tragestruktur verbunden, wobei das zweite Führungselement der ersten Linearführung mit dem ersten Schlitten und das zweite Führungselement der zweiten Linearführung mit dem zweiten Schlitten verbunden ist.

Aufgabe der vorliegenden Erfindung ist es, einen Roboter für ein lineares Transportsystem mit einer einzelnen Schlitten-Führungsschiene bereitzustellen, mit dem sich eine dreidimensionale Bewegung ausführen lässt. Ferner ist es Aufgabe der Erfindung, einen XY-Tisch für einen solchen Roboter bereitzustellen, der zum Befahren einer Schlitten-Führungsschiene mit einem Bogenabschnitt ausgelegt ist. Weiterhin ist es Aufgabe, ein lineares Transportsystem für einen solchen Roboter und einen solchen XY-Tisch zu schaffen.

Diese Aufgabe wird mit einem Roboter gemäß Anspruch 1, einem XY-Tisch gemäß Anspruch 6 und einem linearen Transportsystem gemäß Anspruch 9 gelöst. Bevorzugte Weiterbildungen sind in den abhängigen Ansprüchen angegeben.

Der Roboter für ein lineares Transportsystem mit einer Schlitten-Führungsschiene weist als Grundplatte einen ersten und einen zweiten XY-Tisch auf. Jeder XY-Tisch umfasst einen ersten und einen zweiten Schlitten, die jeweils unabhängig voneinander beweglich an der Schlitten-Führungsschiene angeordnet sind. Ferner ist eine erste und eine zweite Linearführung vorgesehen, die mit einem Winkelversatz zueinander ausgeführt sind. Jede Linearführung weist ein erstes und zweites Führungselement auf, wobei die ersten Führungselemente über eine Tragestruktur miteinander verbunden sind. Das zweite Führungselement der ersten Linearführung ist mit dem ersten Schlitten und das zweite Führungselement der zweiten Linearführung mit dem zweiten Schlitten verbunden. Der Roboter weist weiter ein erstes und ein zweites Armsystem auf, die über ein Gelenksystem miteinander verbunden sind, wobei am Gelenksystem ein Arbeitswerkzeug angeordnet ist. Das erste Armsystem ist über ein erstes Gelenk mit der Tragestruktur des ersten XY-Tisches und das zweite Armsystem über ein zweites Gelenk mit der Tragestruktur des zweiten XY-Tisches verbunden.

Mit dieser Roboterauslegung ist es möglich, mithilfe von vier Schlitten, die auf einer einzelnen Schlitten-Führungsschiene angeordnet sind, eine Drei-Achsen-Bewegung des Arbeitswerkzeuges ausführen, bei der eine beliebige Position in einem dreidimensionalen Arbeitsraum angefahren werden kann. Die beiden die Grundplatte des Roboters bildenden XY-Tische können dabei eine Bewegung in x- und y-Richtung durchführen. Durch synchrones Verfahren der vier die beiden XY-Tische tragenden Schlitten kann der Roboter entlang der Schlitten-Führungsschiene, also in x-Richtung verschoben werden. Über eine Relativbewegung der beiden jeweils einen XY-Tisch tragenden Schlitten zueinander, bei der der Abstand zwischen den Schlitten verändert wird, kann die Tragestruktur des XY-Tisches quer zur Schlitten-Führungsschiene, also in y-Richtung verschoben werden. Die beiden XY-Tische des Roboters spannen so einen zweidimensionalen Arbeitsraum auf, der durch die Länge der Schlitten-Führungsschiene, auf der die Schlitten verfahren werden und die Länge der Linearführungen der beiden XY-Tische bestimmt wird. Durch eine Relativbewegung der beiden XY-Tische zueinander kann dann über ein Verändern des Kopplungswinkels der beiden Armsysteme eine Bewegung des von den Armsystemen getragenen Arbeitswerkzeuges senkrecht zur Schlitten-Führungsschiene, also in z-Richtung ausgeführt werden. Die Größe des Arbeitsraums in z-Richtung wird dabei von der Länge der Armsysteme bestimmt.

Der Roboter ist einfach aufgebaut und kostengünstig herzustellen. Insbesondere ist nur eine einzelne Schlitten-Führungsschiene mit Transportschlitten, die passiv kabellos ausgeführt werden können, erforderlich. Der Roboter kann in so einem Produktions- und Fertigungsprozess eingesetzt werden, bei dem ein Positionieren von Werkstücken in einem dreidimensionalen Arbeitsraum erforderlich ist, wobei zugleich ein Transport über eine längere Strecke ausgeführt werden kann.

Gemäß einer Ausführungsform des Roboters ist das erste Gelenk, mit dem das erste Armsystem mit der Tragestruktur des ersten XY-Tisches verbunden ist, und das zweite Gelenk, mit dem das zweite Armsystem mit der Tragestruktur des zweiten XY-Tisches verbunden ist, jeweils drehbar gegenüber der Tragestruktur gelagert. Mit dieser Ausführungsform des Roboters kann ein weiterer Bewegungsfreiheitsgrad durch eine zusätzliche rotatorische Bewegung erzielt werden. Durch gegenläufiges Verfahren der die beiden Armsysteme tragenden XY-Tische quer zur Schlitten-Führungsschiene kann eine zusätzliche Drehbewegung des Arbeitswerkzeuges, das von den beiden Armsystemen getragen wird, ausgeführt werden.

Gemäß einer weiteren Ausführungsform sind das erste und das zweite Armsystem des Roboters jeweils als ein eine Flächen bildendes zweidimensionales Objekt ausgebildet. Das Gelenksystem, das das erste Armsystem und das zweite Armsystem verbindet, weist ein erstes Gelenk zur Verbindung mit dem ersten Armsystem und ein zweites Gelenk zur Verbindung mit dem zweiten Armsystem auf. Das erste Gelenk und das zweite Gelenk sind dabei über eine Kopplungseinrichtung, vorzugsweise ein Zahngetriebe, miteinander verbunden. Mit dieser Roboterauslegung wird auf einfache Weise eine stabile Lage des vom Gelenksystem getragenen Arbeitswerkzeuges erreicht. Insbesondere wird ein Verkippen des Arbeitswerkzeugs quer zur Führungsschiene verhindert.

Gemäß einer weiteren Ausführungsform des Roboters ist das erste und das zweite Armsystem jeweils als dreidimensionales Objekt ausgebildet, das jeweils eine Drehpunktverbindung mit dem Gelenksystem und der Tragestruktur des zugeordneten XY-Tisches aufweist. Auch mit dieser Ausgestaltung kann eine stabile Position des Arbeitswerkzeuges, das vom Gelenksystem getragen wird, erreicht werden.

Ein XY-Tisch für einen Roboter ist zum Befahren einer Schlitten-Führungsschiene, die einen Bogenabschnitt aufweist, ausgelegt. Der XY-Tisch weist einen ersten und einen zweiten Schlitten auf, die unabhängig voneinander beweglich an der Schlitten-Führungsschiene angeordnet sind. Ferner ist eine erste und zweite Linearführung vorgesehen, die in einem Winkelversatz zueinander angeordnet sind und jeweils ein erstes und zweites Führungselement aufweisen, die entlang einer Bahn gegeneinander verschiebbar ausgelegt sind. Die ersten Führungselemente der ersten und zweiten Linearführung sind dabei über eine Tragestruktur miteinander verbunden. Das zweite Führungselement der ersten Linearführung ist ferner mit dem ersten Schlitten und das zweite Führungselement der zweiten Linearführung mit dem zweiten Schlitten verbunden.

Die erste Linearführung und die zweite Linearführung sind als Kulissenführungen ausgebildet, wobei die ersten Führungselemente der ersten und der zweiten Linearführung jeweils Führungsschienen in Form einer Nut und die zweiten Führungselemente der ersten und der zweiten Linearführung jeweils Gleitelemente in Form eines Kulissenstiftes sind, wobei die Nuten gegeneinander geneigt sind.

Die Verbindung zwischen einer Linearführung und dem zugeordneten Schlitten und/oder der Tragestruktur ist dabei drehbar ausgelegt. Eine Linearführung ist drehbar mit dem zugeordneten Schlitten, bzw. der Tragestruktur verbunden, indem der Kulissenstift der Linearführung drehbar in der Nut der Linearführung gelagert ist.

Mit dieser Ausgestaltung des XY-Tisches, der als eine Grundplatte eines Roboters eingesetzt werden kann, kann ein Verfahren entlang einer beliebigen gekurvten, insbesondere auch einer geschlossenen Schlitten-Führungsschiene ausgeführt werden. Mit dem Vorsehen eines zusätzlichen Gelenks am XY-Tisch besteht die Möglichkeit, eine Kurvenfahrt durchzuführen. Gleichzeitig wird ein kompakter Aufbau erreicht.

Gemäß einer Ausführungsform ist die Nut, in der der drehbar ausgelegte Kulissenstift angeordnet ist, gebogen ausgeführt. Gemäß einer weiteren Ausführungsform ist der drehbar in der gebogenen Nut gelagerte Kulissenstift als Bolzen insbesondere als Rolle ausgeführt. Diese XY-Tisch-Auslegung zeichnet sich durch einen einfachen Aufbau insbesondere des Gelenks, das durch eine Kulissenführung gebildet wird, aus.

Ein lineares Transportsystem mit einem vorstehend beschriebenen Roboter und einem vorstehend beschriebenen XY-Tisch kann eine Schlitten-Führungsschiene mit einem Bogenabschnitt aufweisen, wobei die Führungsschiene insbesondere eine geschlossene Bahn bilden kann. Es kann so eine umlaufende Transportbewegung ausgeführt werden, wobei ein flexibles Ein- und Ausleiten von Werkstücken mithilfe des Roboters möglich ist.

Das lineare Transportsystem ist gemäß einer Ausführungsform so ausgebildet, dass die Schlitten-Führungsschiene auf einem Stator angeordnet ist, der eine Reihenanordnung individuell bestrombarer Spulen aufweist. Jeder Schlitten umfasst wenigstens einen Permanentmagneten, der ausgelegt ist, mit dem Magnetfeld, das von der Reihenanordnung individuell bestrombarer Spulen erzeugt wird, wechselzuwirken. Mit dieser Ausgestaltung ist ein lineares Transportsystem möglich, bei dem der Roboter präzise und hochgenau gesteuert werden kann, wobei alle Achsenbewegungen durch Variationen des drehfeldäquivalenten Wanderfeldes entlang der Schlitten-Führungsstrecke bewirkt werden.

Die Erfindung wird anhand der beigefügten Zeichnungen näher erläutert.

Es zeigen
- Fig. 1: in perspektivischer Ansicht eine erste Roboterausführungsform für ein lineares Transportsystem mit einer Schlitten-Führungsschiene;
- Fig. 2: eine Detailansicht der in Fig. 1 gezeigten Roboterausführungsform;
- Fig. 3 und 4: Aufsichten auf die in Fig. 1 gezeigte Roboterausführungsform mit einer ersten und einer zweiten Positionierung in x- und y-Richtung;
- Fig. 5 und 6: seitliche Ansichten der in Fig. 1 gezeigten Roboterausführungsform mit einer ersten und zweiten Positionierung in z-Richtung;
- Fig. 7: in perspektivischer Ansicht eine zweite Roboterausführungsform für ein lineares Transportsystem mit einer Schlitten-Führungsschiene;
- Fig. 8: eine Detailansicht der in Fig. 7 gezeigten Roboterausführungsform;
- Fig. 9 und 10: eine Aufsicht und eine Seitenansicht der in Fig. 7 gezeigten Roboterausführungsform in einer ersten gedrehten XY-Position;
- Fig. 11 und 12: eine Aufsicht und eine Seitenansicht des in Fig. 7 gezeigten Roboteraufbaus in einer zweiten gedrehten XY-Position;
- Fig. 13 und 14: eine Aufsicht und eine perspektivische Untersicht eines linearen Transportsystems mit zwei XY-Tisch-Ausführungsformen;
- Fig. 15 und 16: perspektivische Detailansichten der zwei in Fig. 13 und 14 gezeigten XY-Tisch-Ausführungsformen;
- Fig. 17 und 18: eine Aufsicht und eine Seitenansicht eines linearen Transportsystems mit einer weiteren XY-Tisch-Ausführungsform; und
- Fig. 19 und 20: perspektivische Detailansichten der in Fig. 17 und 18 gezeigten XY-Tisch-Ausführungsform.

In der Produktion und Fertigung, insbesondere mit verteilten Bearbeitungsstationen spielen Transportsysteme eine wichtige Rolle. Eine wesentliche Zielsetzung ist es dabei, eine hohe Flexibilität beim Transport der zu bearbeitenden Werkstücke zwischen den einzelnen Bearbeitungsstationen zu erzielen. Hierfür eignen sich insbesondere lineare Transportsysteme, bei denen mehrere voneinander unabhängig bewegliche Schlitten entlang einer Führung verfahren werden können.

Lineare Transportsysteme sind bevorzugt so ausgelegt, dass der Motor am Verfahrweg angeordnet ist, wohingegen die Schlitten passiv kabellos ausgeführt sind. Mit solchen linearen Antriebssystemen lassen sich lange Transportstrecken realisieren. Ferner ist es dann auch möglich, eine geschlossenen Bahn zu bilden, um eine umlaufende Transportbewegung zu realisieren. Die Erfindung wird nachfolgend anhand eines solchen linearen Transportsystems mit als Verfahrweg ausgebildeten Motor und kabellosen Transportschlitten erläutert. Es besteht jedoch auch die Möglichkeit, ein anderes lineares Transportsystem einzusetzen, bei dem der Motor in den Transportschlitten angeordnet ist. Neben dem erläuterten elektrischen Antrieb kann auch ein anders geartetes Antriebssystem, zum Beispiel ein hydraulischer oder pneumatischer Antrieb, eingesetzt werden.

Das lineare Transportsystem weist als Motor vorzugsweise einen Stator auf, der eine Reihenanordnung individuell bestrombarer Spulen umfasst. Der Stator ist dabei entsprechend dem gewünschten Verfahrweg ausgeformt und trägt eine Schlitten-Führungsschiene. Auf der Schlitten-Führungsschiene sind die Transportschlitten, im Folgenden auch als Schlitten bezeichnet, angeordnet, die jeweils mit Permanentmagneten versehen sind. Ferner ist ein Positionserfassungssystem vorgesehen, das bevorzugt im Stator integriert ist. Die Signale des Positionserfassungssystems werden über eine Kommunikationsverbindung an eine Steuereinheit weitergeleitet. Die Steuereinheit bestimmt aus den Positionssignalen die Stellung und die Geschwindigkeit der einzelnen Transportschlitten auf der Schlitten-Führungsschiene. Über eine dynamische Ansteuerung der einzelnen Stator-Spulen durch die Steuereinheit entlang des Verfahrweges wird für jeden Transportschlitten ein eigenes magnetisches Wanderfeld erzeugt, um eine gewünschte Fahrbewegung des Schlittens zu bewirken. Das lineare Transportsystem erlaubt es somit, jeden einzelnen Schlitten zeitlich synchron innerhalb von Mikrosekunden lage- und geschwindigkeitsgeregelt exakt zu positionieren.

Um Werkstücke im Bereich von Bearbeitungsstationen ein- und ausleiten zu können, ist sind vier Schlitten des linearen Transportsystems zu einem Roboteraufbau verkoppelt, der eine Bewegung in einem dreidimensionalen Arbeitsraum ermöglicht. Um eine beliebige Position in dem dreidimensionalen Arbeitsraum anzufahren, ist dabei nur die individuelle Ansteuerung der vier Schlitten entlang einer einzigen Schlitten-Führungsschiene erforderlich.

Der Roboter setzt sich dabei aus zwei XY-Tischen zusammen, die jeweils aus zwei unabhängig voneinander auf der Schlitten-Führungsschiene beweglichen Schlitten aufgebaut sind. Jeder XY-Tisch weist dabei zwei Linearführungen auf, die in einem Winkelversatz zueinander ausgeführt sind. Jede Linearführung umfasst ein erstes und ein zweites Führungselement, wobei die beiden ersten Führungselemente über eine Tragestruktur miteinander verbunden sind. Das zweite Führungselement der einen Linearführung ist dabei mit dem einen Schlitten und das zweite Führungselement der anderen Linearführung mit dem anderen Schlitten verbunden.

Die beiden einachsigen Linearführungssysteme der XY-Tische sind bei diesem Aufbau also jeweils einem Schlitten zugeordnet, der unabhängig gesteuert und bewegt werden kann. Durch synchrones Verfahren der beiden Schlitten des XY-Tisches kann der XY-Tisch eine Bewegung entlang der Schlitten-Führungsschiene, also in x-Richtung ausführen. Über eine Relativbewegung der beiden Schlitten des XY-Tisches zueinander, bei der der Abstand zwischen den Schlitten verändert wird, kann dann die Tragestruktur quer zur der Schlitten-Führungsschiene längs der Linearführungen verschoben werden. Die beiden XY-Tische können somit eine zweidimensionale Bewegung in einem Arbeitsraum, der festgelegt wird durch die Länge der der Schlitten-Führungsschiene und die Länge der beiden Linearführungen, ausführen.

Der Roboter weist ferner ein erstes und ein zweites Armsystem auf, die über ein Gelenksystem miteinander verbunden sind, das ein Arbeitswerkzeug trägt. Das eine Armsystem ist dabei mit einem ersten Gelenk mit der Tragestruktur des einen XY-Tisches und das andere Armsystem über ein weiteres Gelenk mit der Tragestruktur des anderen XY-Tisches verbunden. Durch eine Relativbewegung der beiden XY-Tische zueinander kann der Winkel zwischen den beiden Armsystemen und damit des Arbeitswerkzeugs auf dem Gelenksystem senkrecht zur der Schlitten-Führungsschiene verändert werden, so dass über das Verfahren der Schlitten der beiden XY-Tische auch ein Positionieren des Roboters in z-Richtung ermöglicht wird.

Neben den drei translatorischen Freiheitsgraden besteht die Möglichkeit, über eine drehbare Auslegung der Befestigung der beiden Armsysteme auf der Tragestruktur der beiden XY-Tische einen zusätzlichen rotatorischen Freiheitsgrad zu erzielen.

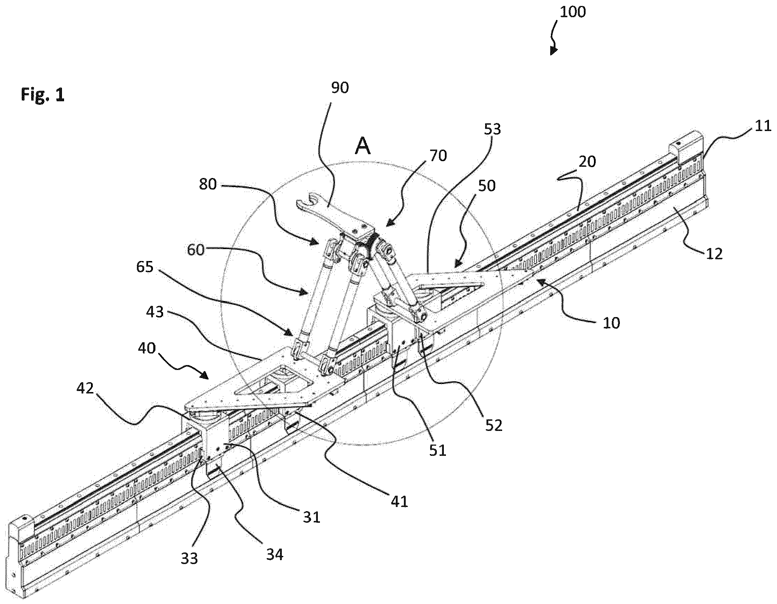

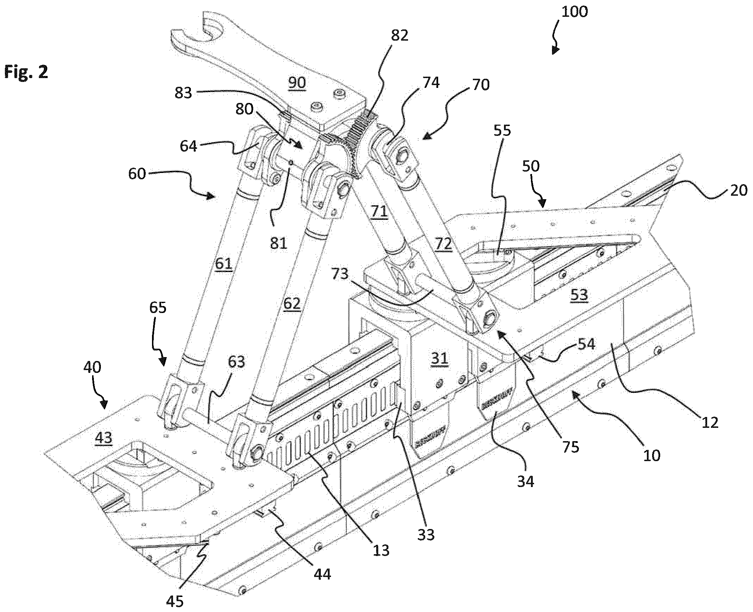

Die Figuren 1 und 2 zeigen eine erste Ausführungsform eines Roboters 100 für ein lineares Transportsystem, der eine Bewegung in die drei Raumrichtungen ausführen kann. Das lineare Transportsystem setzt sich dabei aus mehreren Motormodulen - in der in Fig. 1 gezeigten Ausführungsform aus sechs Motormodulen 10 - zusammen, die aneinandergereiht den Verfahrweg bilden. Die Motormodule können dabei, wie in Fig. 1 gezeigt gerade, oder auch bogenförmig ausgeführt sein. Durch entsprechendes Zusammensetzen von geraden und bogenförmigen Motormodulen besteht die Möglichkeit, eine beliebige Fahrstreckenausformung, insbesondere einen geschlossenen Verfahrweg, zu bilden.

Wie insbesondere auch die Detailansicht in Fig. 2 zeigt, weist jedes Motormodul 10 einen Spulenbereich 11 auf, der auf einem Trägerbereich 12 angeordnet ist. Der Spulenbereich 11 setzt sich aus einer Reihe quer angeordneter Spulen 13 zusammen, die jeweils zur Ansteuerung mit einer im Trägerbereich 12 integrierten Leistungselektronik verbunden sind. Ferner ist in der Wandung des Trägerbereichs 12 eine Positionserfassung vorgesehen. Die Motormodule 10 sind untereinander über Kontaktiereinrichtungen (nicht gezeigt) verbunden. Ferner ist eine Einspeisung (nicht gezeigt) vorgesehen, über die die Datenverbindung mit einer Steuereinheit und die Anbindung an eine Leistungsversorgung erfolgt.

Auf dem Spulenbereich 11 der Motormodule 10 ist eine Schlitten-Führungsschiene 20 angeordnet, die vorzugsweise ebenfalls modular aufgebaut und entsprechend den Motormodulen segmentiert ist. Die Schlitten-Führungsschiene 20 kann sich jedoch auch über mehrere Motormodule 10 erstrecken. Die Geometrie der Schlitten-Führungsschiene 20 ist an die Laufeinrichtung der auf der Schlitten-Führungsschiene geführten Schlitten angepasst.

Der in Fig. 1 und 2 gezeigte Roboter 100 setzt sich aus zwei XY-Tischen 40, 50, zwei Armsystemen 60, 70, einem Gelenksystem 80 und einem Arbeitswerkzeug 90 zusammen. Die XY-Tische 40, 50 weisen jeweils eine Doppelschlittenanordnung auf, die als Antrieb für den jeweiligen XY-Tisch dient. Die Schlitten 41, 42, 51, 52 der beiden Doppelschlittenanordnungen besitzen ein im Querschnitt u-förmiges Schlitten-Trageprofil 31, das die Schlitten-Führungsschiene 20 und den darunterliegenden Spulenbereich 11 des Motormoduls 10 umgreift. Im Inneren des Schlitten-Trageprofils 31 ist im Bereich der Schlitten-Führungsschiene 20 ein Laufrollensystem (nicht gezeigt) als Laufeinrichtung angeordnet, dessen Ausgestaltung auf die Geometrie der Schlitten-Führungsschiene 20 abgestimmt ist, wodurch sich gute Laufeigenschaften und ein geringer Verschleiß ergeben. Alternativ kann anstelle des Laufrollensystems auch ein System aus geeigneten Gleitelementen als Laufeinrichtung mit der Schlitten-Führungsschiene 20 in Eingriff gebracht werden.

Dem Spulenbereich 11 der Motormodule 10 gegenüberliegend weisen die Schlitten-Trageprofile 31 an ihren Innenseiten jeweils Permanentmagneten 33 auf. Die Permanentmagneten 33 wirken mit dem Spulenbereich 11 der Motormodule 10 zusammen, wobei das von den Spulen 13 gebildete magnetische Wanderfeld durch Wechselwirkung mit den Permanentmagneten 33 eine Vortriebskraft auf die Schlitten 41, 42, 51, 52 ausübt, mit der Lage und Geschwindigkeit der Schlitten geregelt werden können.

Am Schlitten-Trageprofil 31 ist ferner eine Geberfahne 34 angeordnet, die der Positionserfassung im Trägerbereich 12 des Motormoduls 10 gegenüberliegt. Die Positionserfassung im Motormodul 10 ist als induktives Sensorsystem ausgebildet, bei dem die Geberfahne 34 eine Störung hervorruft, die dann von der Positionserfassung im Trägerbereich 12 des Motormoduls 10 in ein Positionssignal umgesetzt wird. Dieses wird an die Steuereinheit des linearen Transportsystems weitergegeben, um die Lage und Geschwindigkeit des Schlittens zu bestimmen.

Die in Fig. 1 und 2 gezeigten XY-Tische 40, 50 weisen jeweils eine Tragestruktur 43, 53 auf, die mit einer ersten und einer zweiten Linearführung 44, 45, 54, 55 verbunden sind. Die Tragestruktur 43, 53 ist dabei als ebener Rahmen in Form eines konvexen Vierecks ausgebildet mit einem senkrecht zur Schlitten-Führungsschiene 20 orientierte vorderen Holm. Die Tragestrukturen 43, 53 der beiden XY-Tische 40, 50 sind so orientiert, dass die vorderen Holme sich gegenüberliegen. Es besteht die Möglichkeit, statt eines Rahmens mit innenliegender Öffnung als Tragestruktur eine durchgehende Platte oder auch ein grundsätzlich anders gestaltete Form vorzusehen, die an die Auslegung der Armsysteme angepasst und vorzugsweise gewichtsoptimiert ausgebildet ist.

Die erste und die zweite Linearführung 44, 45, 54, 55 der beiden XY-Tische 40, 50 setzen sich je aus einem ersten als Führungsschiene ausgebildeten ersten Führungselement und einem als Gleitelement ausgebildeten zweiten Führungselement zusammen. Derartige Linearführungen sind aus dem Stand der Technik hinlänglich bekannt. Die beiden Führungsschienen sind an der Unterseite der Tragestruktur 43, 53 angeordnet und mit einem Winkelversatz zueinander montiert. Um einen großen XY-Bewegungsbereich zu erreichen, ist die erste Linearführung 44, 54, wie Fig. 1 und 2 zeigen, parallel zum vorderen Holm der als Rahmen ausgebildeten Tragestruktur 43, 53 montiert. Die zweite Linearführung 45, 55 erstreckt sich dagegen diagonal über die Unterseite der Tragestruktur 43, 53 entlang des hinteren Holms. Das Gleitelement der ersten Linearführung 44, 54 ist auf dem Schlitten-Trageprofil 31 des ersten Schlittens 41, 51 der Doppelschlittenanordnung und das Gleitelement der zweiten Linearführung 45, 55 auf dem Schlitten-Trageprofil 31 des zweiten Schlittens 42, 52 der Doppelschlittenanordnung angeordnet.

Bei der in Fig. 1 und 2 gezeigten Ausführungsform ist die Geometrie der Schlitten-Führungsschiene 20 gerade. Die ersten und die zweiten Linearführungen 44, 45, 54, 55 können deshalb fest mit der Tragestruktur 43, 53 bzw. den Schlitten-Trageprofilen 31 der XY-Tische 40, 50 verbunden sein. Bei einer hier nicht dargestellten gebogenen Ausführungsform der Schlitten-Führungsschiene ist dann wenigstens die erste oder die zweite Linearführung drehbar mit der Tragestruktur des XY-Tisches oder mit dem Schlitten-Trageprofil verbunden. Bevorzugt ist dabei das Gleitelement der Linearführung drehbar ausgelegt, deren Führungsschiene schräg auf der Tragestruktur des XY-Tisches angeordnet ist. Es besteht jedoch auch die Möglichkeit, statt dem Gleitelement die Führungsschiene der Linearführung drehbar mit der Tragestruktur zu verbinden.

Die beiden Armsysteme 60, 70 des in Fig. 1 und 2 gezeigten Roboteraufbaus sind jeweils als ein eine Fläche bildendes zweidimensionales Objekt ausgeformt. Bei der in Fig. 1 und 2 gezeigten Ausführungsform setzt sich das das Armsystem bildende zweidimensionale Objekt aus jeweils zwei Stäben 61, 62, 71, 72 zusammen, die über obere und untere Stangen 63, 64, 73, 74 miteinander verbunden sind. Die Stangen 63, 64, 73, 74 können dabei starr oder auch drehbar mit den beiden Stäben 61, 62, 71, 72 verbunden sein.

Das Armsystem 60, 70 ist jeweils mit der Tragestruktur des zugeordneten XY-Tisches über ein Drehgelenk 65, 75 gekoppelt. Bei der in Fig. 1 und 2 gezeigten Ausführungsform wird das Drehgelenk 65, 75 durch zwei Laschen gebildet, die jeweils auf dem vorderen Holm der Tragestruktur 43, 53 angeordnet sind, in der die untere Stange 63, 73 des Armsystems 60, 70 drehbar gelagert ist. Alternativ besteht auch die Möglichkeit, anders ausgestaltete Gelenke z.B. Kugelgelenke einzusetzen. Ferner kann das Gelenk an einer beliebigen Stelle auf der Tragestruktur des zugeordneten XY-Tisches angeordnet sein.

Ein Gelenksystem 80, das das erste und das zweite Armsystem 60, 70 verbindet, weist einen Träger 81 mit zwei Bohrungen auf, durch die sich jeweils die obere Stange 64, 74 der beiden Armsysteme erstrecken. Seitlich auf beiden Seiten des Trägers 81 ist jeweils ein aus zwei Halbschalen bestehendes Zahngetriebe 82, 83 vorgesehen.

Auf dem Träger 81 des Gelenksystems 80 ist ein Arbeitswerkzeug 90 in Form eines Greifers angeordnet, mit dem ein Werkstück erfasst werden kann. Das am Gelenksystem 80 angeordnete Arbeitswerkzeug 90 kann jedoch eine beliebige Form aufweisen, die an den auszuführenden Vorgang bzw. das zu bewegende Werkstück angepasst ist. Das Arbeitswerkzeug 90 kann auch zusätzlich einen Antrieb z.B. für einen Aktuator aufweisen. Das Arbeitswerkszeug könnte alternativ auch z.B. einen Bohrkopf, eine Klebedüse (eine Art Heißklebepistole), oder einen Sensor, der z.B. die Oberflächenrauhigkeit oder die Temperatur von Werkstücken aufnimmt.

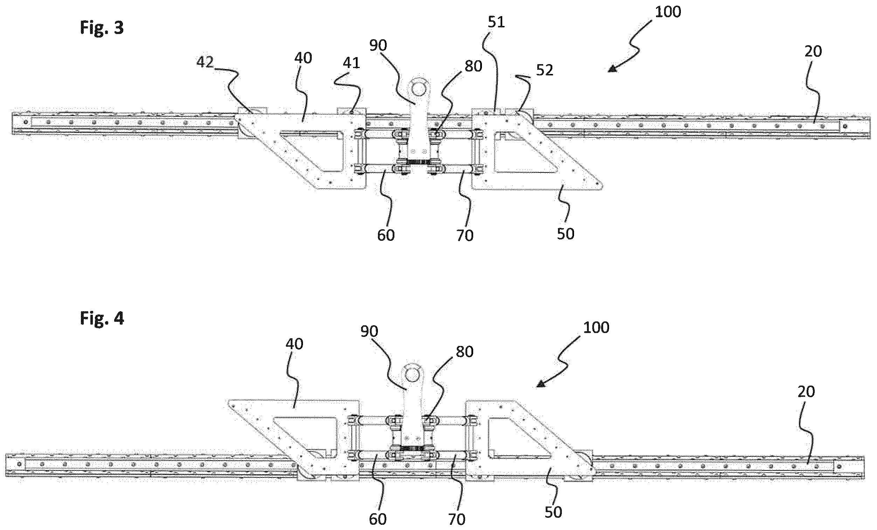

Die Fig. 3, 4, 5 und 6 zeigen den in Fig. 1 und 2 dargestellten Roboter 100 in unterschiedlichen Positionierungen. Die Fig. 3 und 4 sind dabei jeweils Aufsichten auf den Roboter 100, wobei die XY-Tische 40, 50 jeweils maximal seitlich gegenüber der Schlitten-Führungsschiene 20 verschoben sind. Die Positionierung der beiden XY-Tische 40, 50 des Roboters 100 in y-Richtung erfolgt durch eine Relativbewegung der beiden Schlitten der zugeordneten Doppelschlittenanordnung zueinander. Bei der in Fig. 3 gezeigten ersten Maximalposition in y-Richtung sind die beiden Schlitten 41, 42 des ersten XY-Tisches 40 maximal auseinander gefahren und die beiden Schlitten 51, 52 des zweiten XY-Tisches 50 mit minimal Abstand zueinander positioniert. Bei der in Fig. 4 gezeigten zweiten Maximalposition in y-Richtung ist der Abstand zwischen den Schlitten 41, 42, 51, 52 des jeweiligen XY-Tisches 40, 50 genau entgegengesetzt zu Fig. 3.

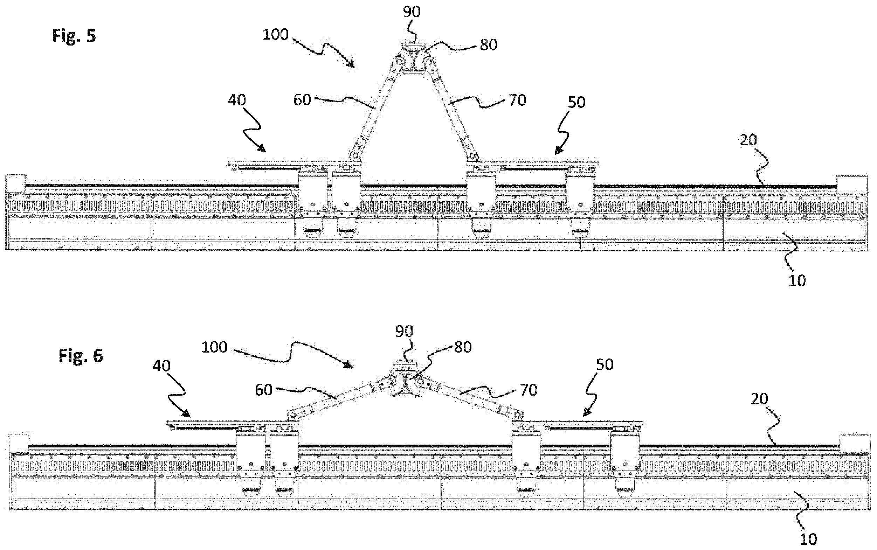

Die Fig. 5 und 6 zeigen seitliche Ansichten des Roboters 100, bei denen eine Positionierung des Arbeitswerkzeuges 90 des Roboters 100 in z-Richtung senkrecht zur Schlitten-Führungsschiene 20 vorgenommen wird. Bei den in Fig. 5 und 6 gezeigten Stellungen der XY-Tische 40, 50 bleiben die Relativpositionen der beiden Schlitten des jeweiligen XY-Tisches 40, 50 gleich, wohingegen die beiden XY-Tisch 40, 50 gegeneinander verschoben sind. Durch den veränderten Abstand zwischen den beiden XY-Tischen 40, 50 wird der Winkel zwischen den beiden Armsystemen 60, 70 und damit der Abstand des auf dem Gelenksystem 80 angeordneten Arbeitswerkzeuges 90 in z-Richtung in Bezug zur Schlitten-Führungsschiene 20 variiert.

Die beiden seitlichen Zahngetriebe 82, 83 des Gelenksystems 80 sorgen dafür, dass ein Verkippen des Arbeitswerkzeuges 90 beim Auseinanderfahren der XY-Tische 40, 50 verhindert wird. Alternativ zu den Zahngetrieben 82, 83 besteht auch die Möglichkeit, über eine anders ausgestaltete Kopplung der beiden Drehgelenke des Gelenksystems 80 das Arbeitswerkzeug 90 auf dem Gelenksystem 80 bei einer Bewegung des Roboters 100 stabil zu halten.

Der in den Fig. 1 bis 6 dargestellte Roboter 100 für ein lineares Transportsystem zeichnet sich durch einen einfachen Aufbau aus und lässt sich mit geringem Steueraufwand beliebig in einem dreidimensionalen Arbeitsraum positionieren. Mithilfe von vier Schlitten, die auf einer einzelnen Schlitten-Führungsschiene angeordnet sind und getrennt angesteuert werden können, kann eine Drei-Achsen-Bewegung des Arbeitswerkzeuges ausführen, bei der eine beliebige Position in einem dreidimensionalen Arbeitsraum angefahren werden kann.

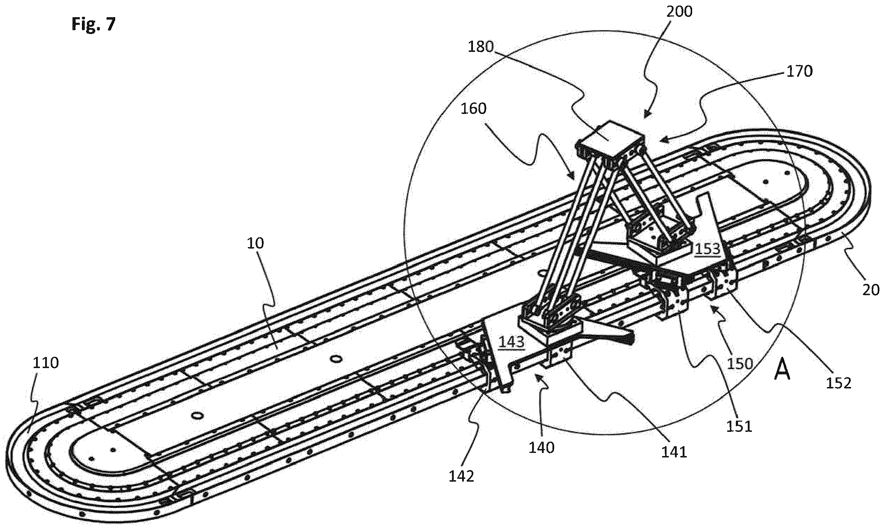

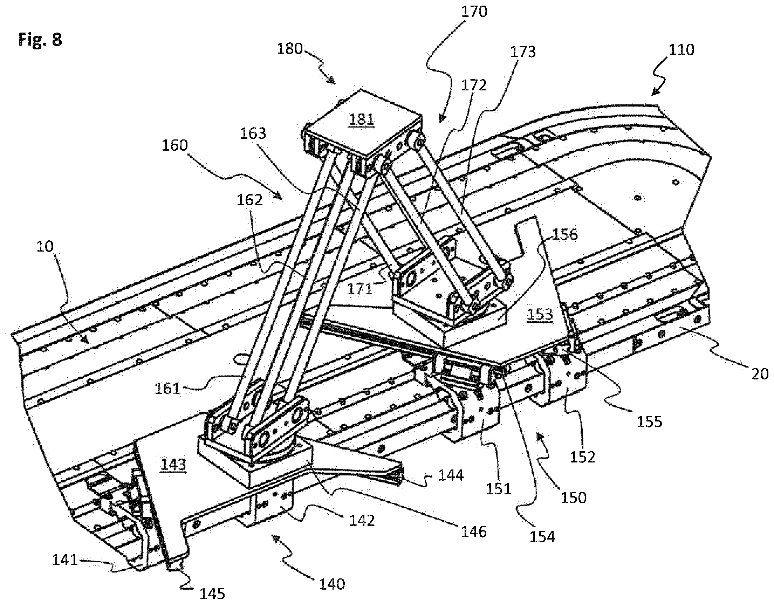

Die Fig. 7 und 8 zeigen eine zweite Ausführungsform eines Roboters 200 für ein lineares Transportsystem. Im Weiteren werden nur die Unterschiede zu dem in Fig. 1 und 2 gezeigten Roboteraufbau erläutert.

Fig. 7 zeigt ein lineares Transportsystem mit einer geschlossenen Schlitten-Führungsschiene 20. Das lineare Transportsystem weist zwei Kurven-Motormodulen 110 mit jeweils dazwischenliegenden geraden Motormodulen 10 auf. Die Motormodule 10, 110 sind liegend angeordnet, wobei zwei XY-Tische 140, 150 parallel zur Bahnebene der Motormodule 10, 110 verfahren werden. Eine erste und eine zweite Linearführung 144, 145, 154, 155 der beiden XY-Tische 140, 150 sind parallel zur Bahnebene ausgerichtet. Wie in Fig. 7 und 8 gezeigt, sind die ersten und die zweiten Linearführung 144, 145, 154, 155 hierzu seitlich an einem Schlitten-Trageprofil 143, 153 des ersten bzw. des zweiten Schlittens 141, 142, 151, 152 des jeweiligen XY-Tisches 140, 150 angeordnet.

Der Aufbau des XY-Tisches 140, 150 entspricht sonst im Weiteren im Wesentlichen dem XY-Tisch-Aufbau, wie er im Zusammenhang mit dem in Fig. 1 und 2 gezeigten Ausführungsform erläutert ist. Im Unterschied zu den in Fig. 1 und 2 gezeigten XY-Tischen 40, 50 sind jedoch die beiden Führungsschienen der beiden Linearführungen 144, 145, 154, 155 jeweils schräg zur Schlitten-Führungsschiene 20 an der Tragestruktur 143, 153 der XY-Tische 140, 150 angeordnet. Die Tragestruktur 143, 153 der XY-Tische 140, 150 ist auch als durchgehende Platte ausgeformt, wobei ein erstes und ein zweites Armsystem 160, 170 des Roboters 200 mittig auf der Tragestruktur angeordnet ist. Um eine Kurvenfahrt der XY-Tische 140, 150 ausführen zu können, ist wenigstens eine der beiden Linearführungen 144, 145, 154, 155 mit dem zugeordneten Schlitten 141, 142, 151, 152 bzw. der Tragestruktur 143, 153 drehbar verbunden. Die Positionierung der XY-Tische 140, 150 in Bezug auf die Schlitten-Führungsschiene 20, d.h. ein Verschiebung in y-Richtung, erfolgt dabei auf die gleiche Weise wie bei der in Fig. 1 und 2 gezeigten XY-Tisch-Auslegung, nämlich durch eine Relativbewegung der beiden Schlitten des XY-Tisches.

Ein wesentlicher Unterschied bei der Ausführungsform des Roboters 200 in Fig. 7 und 8 im Vergleich zu der in Fig. 1 und 2 gezeigten Ausführungsform besteht jedoch in der Ausgestaltung der beiden Armsysteme 160, 170. Die beiden Armsysteme 160, 170 sind jeweils als dreidimensionale Objekte ausgebildet, die jeweils eine Dreipunktverbindung mit einem Gelenksystem 180 bzw. der Tragestruktur 143, 153 des zugeordneten XY-Tisches 140, 150 aufweisen. Jedes Armsystem 160, 170 setzt sich aus drei parallel zueinander angeordneten Stäben 161, 162, 163, 171, 172, 173 zusammen, die jeweils mit ihren Enden eine eigenständige dreieckige Grundfläche im Bereich der Tragestruktur 143, 153 des zugeordneten XY-Tisches 140, 150 und eine gemeinsame dreieckige Arbeitsfläche im Bereich des Gelenksystems 180 bilden.

Zwischen dem Armsystem 160, 170 und der Tragestruktur 143, 153 des zugeordneten XY-Tisches 140, 150 ist ferner ein Drehgelenk 146, 156 vorgesehen, das zwei drehbar zueinander gelagerte Platten aufweist. Die eine Platte des Drehgelenks 146, 156 ist dabei mit der Tragestruktur 143, 153 des XY-Tisches 140, 150 verbunden. Die andere Platte des Drehgelenks 146, 156 weist, auf drei Ecken der Platte verteilt, jeweils ein Drehgelenk auf, das mit einem Endabschnitt einer der drei Stäbe 161, 162, 163, 171, 172, 173 des Armsystems 160, 170 verbunden ist. Alternativ zu einem Drehgelenk kann auch ein anders ausgestaltetes Gelenk z.B. ein Kugelgelenk eingesetzt werden.

Der andere Endabschnitt der drei Stäbe 161, 162, 163, 171, 172, 173 des ersten und des zweiten Armsystems 160, 170 ist jeweils mit dem Gelenksystem 180 verbunden. Das Gelenksystem 180 weist eine Trägerplatte 181 auf, die an den vier Ecken jeweils ein Gelenk, in der gezeigten Ausführungsform ein Drehgelenk aufweist. In diesen vier Drehgelenken sind jeweils die Stäbe 161, 162, 163, 171, 172, 173 des ersten und des zweiten Armsystems 160, 170 drehbar gelagert, wobei an zwei gegenüberliegenden Ecken jeweils ein Stab sowohl des ersten als auch des zweiten Armsystems 160, 170 angeordnet ist.

Auf der Trägerplatte 181 des Gelenksystems 180 kann ein beliebig ausgeformtes Arbeitswerkzeug, zum Beispiel das in Fig. 1 und 2 gezeigte Arbeitswerkzeug 90, angeordnet sein. Die in Fig. 7 und 8 gezeigte Roboterauslegung 200 ermöglicht neben einer translatorischen Bewegung in die drei Raumrichtungen zusätzlich eine Drehbewegung und weist somit vier Freiheitsgrade auf. Auch die zusätzliche rotatorische Bewegung wird wiederum ausschließlich durch Verfahren der vier den zwei XY-Tischen 140, 150 zugeordneten Schlitten 141, 142, 151, 152 bewirkt.

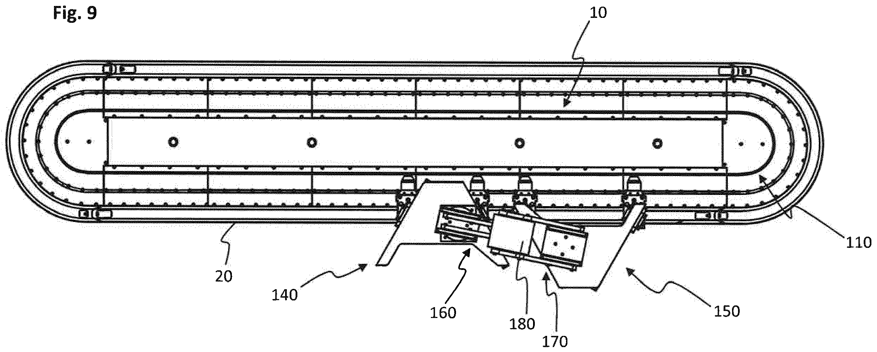

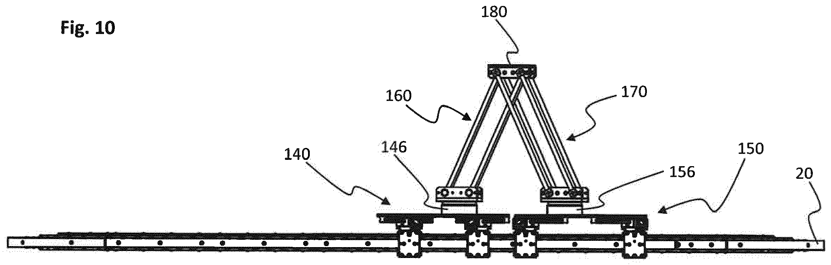

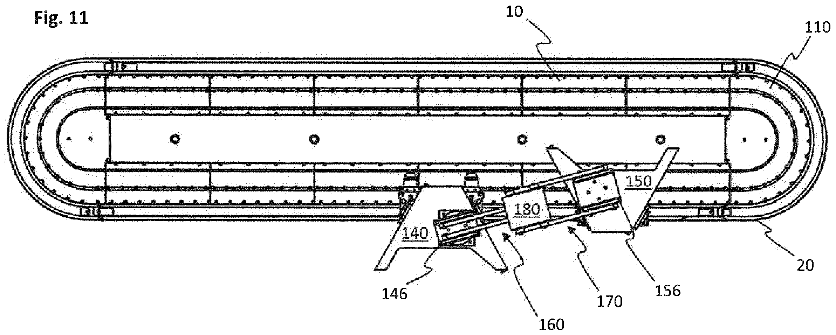

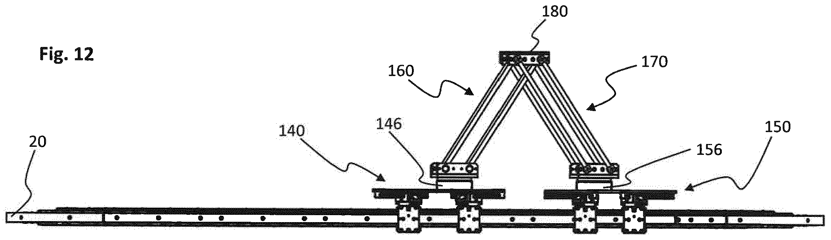

Die Fig. 9 bis 12 zeigen die in Fig. 7 und 8 dargestellte Roboterausführung 200 in zwei unterschiedlichen durch die zusätzliche rotatorische Bewegung erzeugten Positionen. Fig. 9 zeigt dabei eine Aufsicht und Fig. 10 eine Seitenansicht einer ersten gedrehten Position und Fig. 11 eine Aufsicht und Fig. 12 eine Seitenansicht einer zweiten gedrehten Position.

Wie die Aufsicht in Fig. 9 zeigt, befindet sich der XY-Tisch 140 bezüglich einer Verschiebung in y-Richtung in einer nahezu mittigen Position zwischen seinen beiden maximal möglichen Positionen in y-Richtung. Der XY-Tisch 150 ist dagegen maximal seitlich, also in y-Richtung gegen die Schlitten-Führungsschiene 20 verschoben, wobei die beiden XY-Tische 140, 150 gegenläufig zur durch die Schlitten-Führungsschiene 20 vorgegebene X-Richtung verfahren sind. Die gegeneinander verschobene Positionierung der beiden XY-Tische 140, 150 führt zu einer Drehbewegung der beiden Armsysteme 160, 170 des Roboters 200, vermittelt durch das jeweils zwischen der Tragestruktur 143, 153, des XY-Tisches 140, 150 und dem zugeordneten Armsystem 160, 170 angeordnete Drehgelenk 146, 156. Die Aufsicht in Fig. 11 zeigt dann im Vergleich zur Aufsicht in Fig. 9 die entgegengesetzte Positionierung des XY-Tisches 150 des Roboters 200 in Bezug auf die Schlitten-Führungsschiene 20, was zur genau entgegengesetzten Drehung der Armsysteme 160, 170 des Roboters führt.

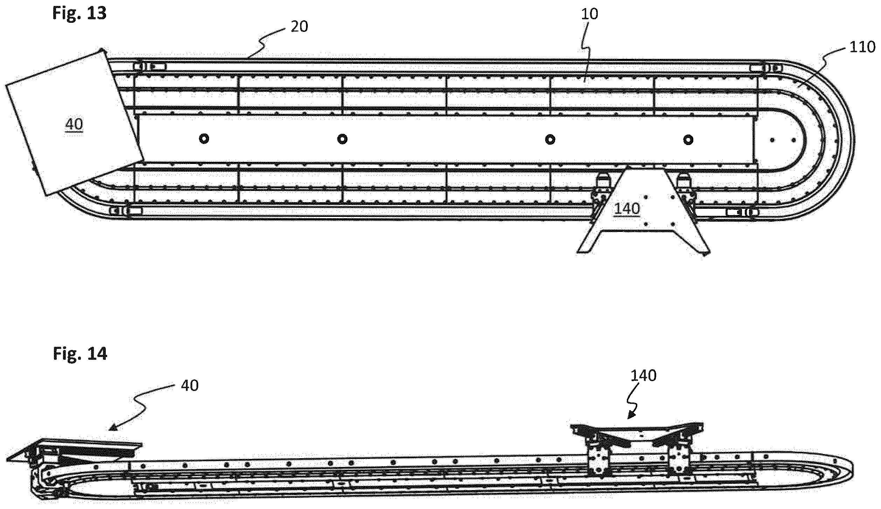

In den Fig. 13 bis 20 sind weitere mögliche Varianten des XY-Tisches für einen Roboter, wie er in den vorstehend anhand von zwei Ausführungsformen erläutert ist, gezeigt. Alle XY-Tische sind ausgelegt zum Verfahren auf einem geschlossenen linearen Transportsystem, bei dem die Motormodule wie in den Figuren 7 und 8 dargestellt, plan angeordnet sind und die Tragestruktur des XY-Tisches seitlich parallel zu den Motormodulen positioniert ist. Grundsätzlich besteht jedoch immer auch die Möglichkeit, die Tragestruktur der XY-Tische entlang der Stirnfläche der Schlitten-Führungsschiene 20 der Motormodule zu führen, die bei der Ausführungsform in Fig. 1 und 2 dargestellt. Um dann eine Kurvenfahrt des XY-Tisches zu ermöglichen, ist es jedoch dann erforderlich, dass die erste und die zweite Linearführung des XY-Tisches kippbar mit den ersten bzw. zweiten Schlitten verbunden sind. Eine solche Kippbewegung kann zum Beispiel mithilfe von zwei im Querschnitt u-förmige Drehgestelle ermöglicht werden, die jeweils das Trageprofil des ersten bzw. zweiten Schlittens umgreifen und an den beiden Seitenflächen um einen Drehpunkt drehfest angeordnet sind. Auf den Stirnflächen der Drehgestelle sind dann die beiden Linearführungen des zugeordneten XY-Tisches angeordnet.

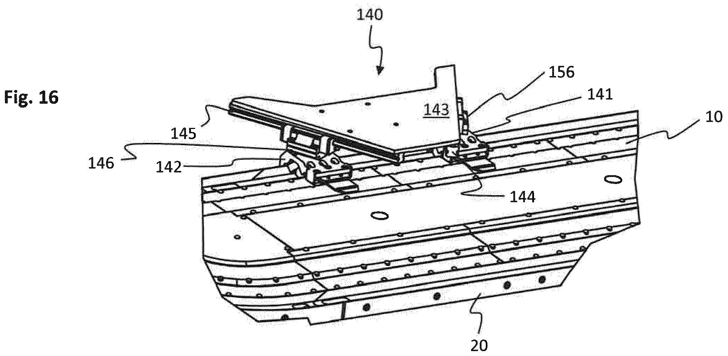

Fig. 13 zeigt in der Aufsicht und Fig. 14 in der perspektivischen Untersicht zwei XY-Tisch-Ausgestaltungen, wobei die eine XY-Tisch-Ausgestaltung dem XY-Tisch 140 entspricht, der bei dem in Fig. 7 und 8 dargestellten Roboteraufbau eingesetzt wird. Fig. 16 zeigt eine perspektivische Detailansicht dieser XY-Tisch-Ausgestaltung.

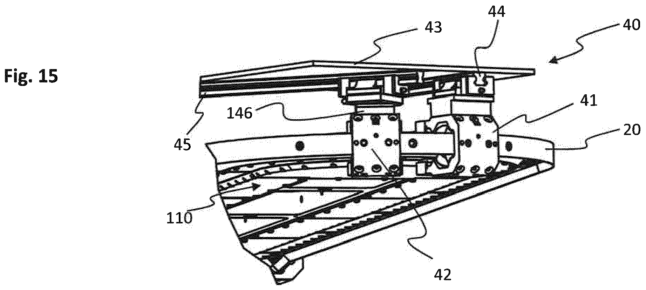

Der weitere, in Fig. 13 und 14 gezeigte XY-Tisch 40 entspricht im Wesentlichen dem XY-Tisch 40, wie in Zusammenhang mit der in Fig. 1 und 2 gezeigten Roboterausgestaltung beschrieben wurde. Fig. 15 zeigt eine Detailansicht dieser XY-Tisch-Ausgestaltung. Im Gegensatz zu diesem XY-Tisch 40 ist jedoch die Tragestruktur 43 des XY-Tisches 40 als durchgehende Platte ausgebildet. Grundsätzlich besteht die Möglichkeit vor allem die Tragestruktur 43 des XY-Tisches 40 gewichtsoptimiert und angepasst an die Ausgestaltung der Roboterarme bzw. der Drehbefestigung mit diesen Roboterarmen anzupassen. Da die Schlitten-Führungsschiene 20 in den Fig. 13 und 14 gekurvte Bereiche aufweist, muss der XY-Tisch 40, 140 in jedem Fall eine Linearführung 44, 45, 144, 145 und zumindest ein Drehgelenk 146, 156 zur Verbindung mit dem zugehörigen Schlitten 41, 42, 141, 142 bzw. der Tragestruktur 43, 143 aufweisen. Alternativ zu einem Drehgelenk ist auch der Einsatz eines anders ausgestalteten Gelenks z.B. eines Kugelgelenks möglich.

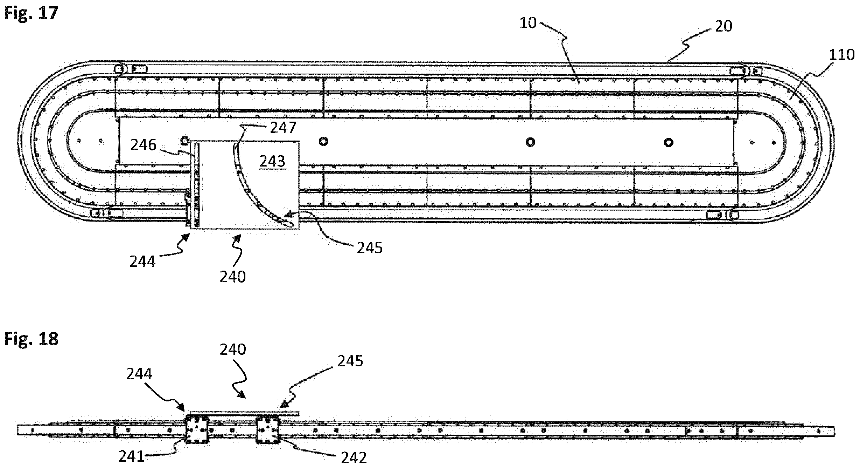

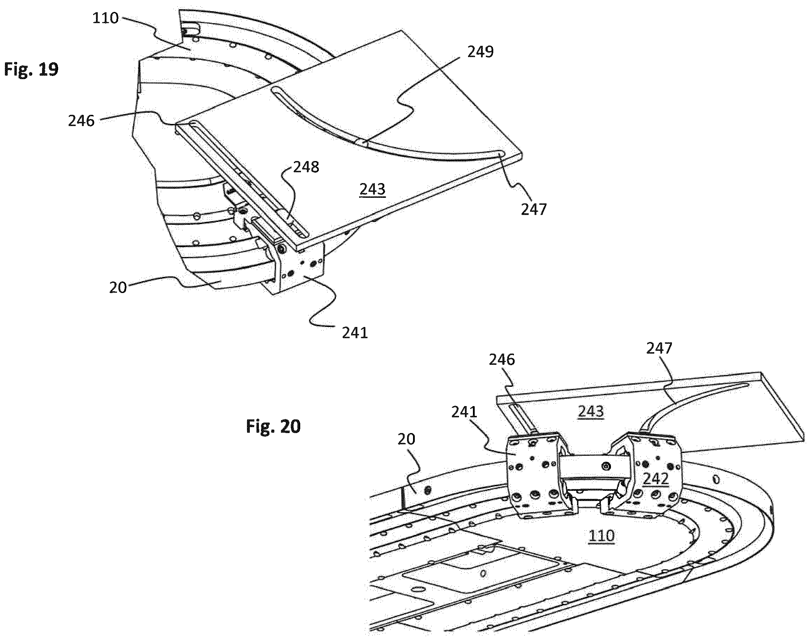

Eine weitere mögliche Variante eines XY-Tisches 240 ist in den Fig. 17 bis 20 gezeigt, wobei Fig. 17 den XY-Tisch 240 auf einem geschlossenen linearen Transportsystem in der Aufsicht und Fig. 18 in der Seitenansicht zeigt. Die Fig. 19 und 20 sind jeweils Detailansichten des XY-Tisches 240, perspektivisch von oben und von unten gesehen.

Diese Ausführungsform des XY-Tisches 240 unterscheidet sich von den bereits erläuterten XY-Tischen in der Ausgestaltung der beiden Linearführungen 244, 245 des XY-Tisches 240, die als Kulissenführungen ausgebildet sind. Die Linearführungen 244, 245 weisen jeweils als Führungsschiene eine Nut 246, 247 auf, in der als Gleitelement der Linearführung ein Kulissenstift 248, 249 angeordnet ist. Die Nuten 246, 247 der beiden Linearführungen 244, 245 sind, wie Fig. 17, 19 und 20 zeigen, direkt in einer Tragestruktur 243 des XY-Tisches 240 als offener Spalt ausgeformt. Es besteht jedoch auch die Möglichkeit, die Nut als Vertiefung in der Tragestruktur 243 beziehungsweise in einem Zusatzelement vorzusehen.

Um eine XY-Bewegung des Tisches zu ermöglichen, sind die Nuten 246, 247 gegeneinander geneigt, wobei die Nutform variiert werden kann und, wie in der Ausführungsform gezeigt, als Gerade gemäß der Nut 246 beziehungsweise als Bogen gemäß der Nut 247 ausgebildet sein kann. Die Nuten können jedoch auch zum Beispiel als ein Kreissegment oder ein Teil einer Gauß-Kurve ausgeformt sein. Die Nutform kann dabei optimal an die gewünschte XY-Bewegung des XY-Tisches 240 bzw. die Auslegung der Schlitten-Führungsschiene 20 des linearen Transportsystems angepasst sein.

Um eine Kurvenfahrt des XY-Tisches 240 zu ermöglichen, ist es, wie erläutert, erforderlich, dass eine Linearführung 244, 245 drehbar in Bezug auf die Tragestruktur 243 bzw. den zugehörigen Schlitten 241, 242 ausgelegt ist. Dies kann bei einer in Form einer Kulissenführung ausgebildeten Linearführung 244, 245, wie bei dem XY-Tisch 240 vorgesehen, durch eine drehbare Auslegung des Kulissenstifts 248, 249 erreicht werden. Der drehbar ausgelegte Kulissenstift 248, 249 ist dabei vorzugsweise, wie die Figuren 17 bis 20 zeigen, in der gebogenen Nut 247 angeordnet und kann in der einfachsten Ausführungsform ein fester Bolzen sein, der sich durch die Nut 247 erstreckt. Um eine möglichst verschleißfreie Bewegung des Bolzens in der Nut 247 zu erreichen, kann der Bolzen am Schlitten 242 noch drehbar gelagert ein, beispielsweise in Form einer Rolle. Der in der geraden Nut 246 als Gleitelemente eingesetzte Kulissenstift 249 kann dagegen starr mit dem Schlitten 241 verbunden sein und, wie insbesondere Fig. 19 zeigt, im Querschnitt die Form einer Ellipse besitzen. Es besteht jedoch auch die Möglichkeit, anders geformte Kulissensteine 248, 249 einzusetzen.

Der XY-Tisch 240 mit Linearführungen 246, 247 in Form von Kulissenführungen ist mechanisch besonders einfach aufgebaut und damit kostengünstig herzustellen. Es besteht auch die Möglichkeit, eine als Kulissenführung ausgebildete Linearführung in Kombination mit einer anders gearteten Linearführung, wie sie im Zusammenhang mit den weiteren XY-Tischen beschrieben wurde, einzusetzen. Alle erläuterten XY-Tisch-Ausführungsformen lassen sich außerdem bei den vorstehend beschriebenen Roboter-Ausführungsformen verwenden.

### Bezugszeichen

10 Motormodul
110 Kurven-Motormodul
11 Spulenbereich
12 Trägerbereich
13 Spule
20 Schlitten-Führungsschiene
31 Schlitten-Trageprofil
33 Permanentmagnet
34 Geberfahne
40, 140, 240 XY-Tisch
41, 141, 241 Schlitten
42, 142, 242 Schlitten
43, 143, 243 Tragestruktur
44, 144, 244 Linearführung
45, 145, 245 Linearführung
50, 150 zweiter XY-Tisch
51, 151 Schlitten
52, 152 Schlitten
53, 153 Tragestruktur
54, 154 Linearführung
55, 155 Linearführung
60, 160 Armsystem
61, 62, 161, 162, 163 Stab
63, 64 Stange
65, 75 Drehgelenk
70, 170 Armsystem
71, 72, 171, 172, 173 Stab
73, 74 Stange
80, 180 Gelenksystem
81, 181 Träger
82, 83 Zahngetriebe
90 Arbeitswerkzeug
100, 200 Roboter
146, 156 Drehgelenk
246, 247 Kulissennut
248, 249 Kulissenstift

## Patentansprüche

1. Roboter für ein lineares Transportsystem mit einer Schlitten-Führungsschiene (20), aufweisend
Schlitten (41, 141, 241, 42, 142, 242, 51, 151, 52, 152) die unabhängig voneinander beweglich an der Schlitten-Führungsschiene angeordnet sind, und
Armsysteme (60, 160, 70, 170) die über ein Gelenksystem (80, 180) miteinander verbunden sind, und
ein Arbeitswerkzeug (90), das mit dem Gelenksystem verbunden ist
**gekennzeichnet durch**
einen ersten und einen zweiten XY-Tisch (40, 140, 240, 50, 150) jeweils aufweisend
einen ersten und einen zweiten Schlitten (41, 141, 241, 42, 142, 242, 51, 151, 52, 152), und
eine erste und eine zweite Linearführung (54, 154, 55, 155, 246, 247, 248, 249) die jeweils ein erstes und ein zweites Führungselement aufweisen, die entlang einer Bahn gegeneinander verschiebbar sind,
wobei die erste und die zweite Linearführung mit einem Winkelversatz zueinander ausgeführt sind,
wobei die ersten Führungselemente der ersten und zweiten Linearführung über eine Tragestruktur (43, 143, 243, 53, 153) verbunden sind, und
wobei das zweite Führungselement der ersten Linearführung mit dem ersten Schlitten und das zweite Führungselement der zweiten Linearführung mit dem zweiten Schlitten verbunden ist; und
ein erstes Armsystem (60, 160), das über ein erstes Gelenk (65, 146) mit der Tragestruktur des ersten XY-Tisches verbunden ist, und ein zweites Armsystem (70, 170), das über ein zweites Gelenk (75, 156) mit der Tragestruktur des zweiten XY-Tisches verbunden ist.

2. Roboter nach Anspruch 1, wobei das erste Gelenk (146) drehbar an der Tragestruktur (143) des ersten XY-Tisches (140) und das zweite Gelenk (156) drehbar an der Tragestruktur (153) des zweiten XY-Tisches (150) gelagert ist.

3. Roboter nach Anspruch 1 oder 2,
wobei das erste und das zweite Armsystem (60, 70) jeweils als ein eine Fläche bildendes zweidimensionales Objekt ausgebildet ist, wobei das Gelenksystem (80) ein erstes Gelenk zur Verbindung mit dem ersten Armsystem und ein zweites Gelenk zur Verbindung mit dem zweiten Armsystem aufweist, wobei das erste Gelenk und das zweites Gelenk über eine Kopplungseinrichtung (82, 83) miteinander verbunden sind.

4. Roboter nach Anspruch 3, wobei die Kopplungseinrichtung ein Zahngetriebe (82, 83) ist.

5. Roboter nach Anspruch 1 oder 2,
wobei das erste und das zweite Armsystem (160, 170) jeweils als dreidimensionales Objekt ausgebildet ist, das jeweils eine Dreipunktverbindung mit dem Gelenksystem (180) und der Tragestruktur (143, 153) des zugeordneten XY-Tisches (140, 150) aufweist.

6. XY-Tisch für einen Roboter nach einem der Ansprüche 1 bis 5, ausgelegt zum Befahren einer Schlitten-Führungsschiene (20), die einen Bogenabschnitt aufweist, mit einem ersten und einem zweiten Schlitten (41, 141, 241, 42, 142, 242, 51, 151, 52, 152), die unabhängig voneinander beweglich an der Schlitten-Führungsschiene angeordnet sind,
einer ersten und einer zweiten Linearführung (54, 154, 55, 155, 246, 247, 248, 249), die jeweils ein erstes und ein zweites Führungselement aufweisen, die entlang einer Bahn gegeneinander verschiebbar sind,
wobei die erste und die zweite Linearführung mit einem Winkelversatz zueinander ausgeführt sind,
wobei die ersten Führungselemente der ersten und zweiten Linearführung über eine Tragestruktur (43, 143, 243, 53, 153) verbunden sind,
wobei das zweite Führungselement der ersten Linearführung mit dem ersten Schlitten und das zweite Führungselement der zweiten Linearführung mit dem zweiten Schlitten verbunden ist,
**dadurch gekennzeichnet, dass**
die erste Linearführung und die zweite Linearführung als Kulissenführungen ausgebildet sind, wobei die ersten Führungselemente der ersten und der zweiten Linearführung jeweils Führungsschienen in Form einer Nut (246, 247) und die zweiten Führungselemente der ersten und der zweiten Linearführung jeweils Gleitelemente in Form eines Kulissenstiftes (248, 249) sind,
wobei die Nuten (246, 247) gegeneinander geneigt sind, und
wobei eine Linearführung drehbar mit dem zugeordneten Schlitten bzw. der Tragestruktur verbunden ist, in dem der Kulissenstift (249) der Linearführung drehbar in der Nut (247) der Linearführung gelagert ist.

7. XY-Tisch nach Anspruch 6, wobei die Nut (247), in der der drehbar ausgelegte Kulissenstift (249) angeordnet ist, gebogen ausgeführt ist.

8. XY-Tisch nach Anspruch 7, wobei der drehbar in der gebogenen Nut gelagerte Kulissenstift (249) ein Bolzen, vorzugsweise eine Rolle ist.

9. Lineares Transportsystem umfassend
eine Schlitten-Führungsschiene (20) mit einem Bogenabschnitt, und
einen Roboter (100, 200) nach einem der Ansprüche 1 bis 5, wobei der erste und der zweite XY-Tisch (40, 140, 240, 50, 150) jeweils ein XY-Tisch nach einem der Ansprüche 6 bis 8 ist.

10. Lineares Transportsystem nach Anspruch 9, wobei die Schlitten-Führungsschiene (20] eine geschlossene Bahn bildet.

11. Lineares Transportsystem nach Anspruch 9 oder 10, wobei die Schlitten-Führungsschiene (20) auf einem Stator (11) angeordnet ist, der eine Reihenanordnung individuell bestrombarer Spulen (13) aufweist, und
wobei die Schlitten (41, 141, 241, 42, 142, 242, 51, 151, 52, 152) jeweils wenigstens einen Permanentmagneten (33) umfassen, der ausgelegt ist, mit dem von der Reihenanordnung individuell bestrombaren Spulen gebildeten Magnetfeld wechselzuwirken.

## Claims

1. Robot for a linear transport system comprising a carriage guide rail (20), having
carriages (41, 141, 241, 42, 142, 242, 51, 151, 52, 152), which are each arranged in such a way as to be movable independently of one another on the carriage guide rail, and
arm systems (60, 160, 70, 170), which are connected to one another via an articulated system (80, 180), and
a work tool (90), which is connected to the articulated system,
**characterized by**
a first and a second XY table (40, 140, 240, 50, 150), each having
a first and a second carriage (41, 141, 241, 42, 142, 242, 51, 151, 52, 152), and
a first and a second linear guide (54, 154, 55, 155, 246, 247, 248, 249), which each have a first and a second guide element, which can be moved relative to one another along a path,
wherein the first and the second linear guide are configured with an angular offset with respect to one another,
wherein the first guide elements of the first and the second linear guide are connected to one another via a support structure (43, 143, 243, 53, 153), and wherein the second guide element of the first linear guide is connected to the first carriage, and the second guide element of the second linear guide is connected to the second carriage; and
a first arm system (60, 160), which is connected to the support structure of the first XY table via a first joint (65, 146), and a second arm system (70, 170), which is connected to the support structure of the second XY table via a second joint (75, 156).

2. Robot according to Claim 1, wherein the first joint (146) is rotatably mounted on the support structure (143) of the first XY table (140), and the second joint (156) is rotatably mounted on the support structure (153) of the second XY table (150).

3. Robot according to Claim 1 or 2,
wherein the first and the second arm system (60, 70) are each configured as a two-dimensional object forming a surface, wherein the articulated system (80) has a first joint for connection to the first arm system and a second joint for connection to the second arm system, wherein the first joint and the second joint are connected to one another by a coupling device (82, 83).

4. Robot according to Claim 3, wherein the coupling device is a gear mechanism (82, 83).

5. Robot according to Claim 1 or 2,
wherein the first and the second arm system (160, 170) are each configured as a three-dimensional object which in each case has a three-point connection to the articulated system (180) and the support structure (143, 153) of the associated XY table (140, 150).

6. XY table for a robot according to any one of Claims 1 to 5, designed to travel along a carriage guide rail (20) which has an arc section, having a first and a second carriage (41, 141, 241, 42, 142, 242, 51, 151, 52, 152), which are each arranged in such a way as to be movable independently of one another on the carriage guide rail, and
a first and a second linear guide (54, 154, 55, 155, 246, 247, 248, 249), which each have a first and a second guide element, which can be moved relative to one another along a path,
wherein the first and the second linear guide are configured with an angular offset with respect to one another,
wherein the first guide elements of the first and the second linear guide are connected to one another via a support structure (43, 143, 243, 53, 153) wherein the second guide element of the first linear guide is connected to the first carriage, and the second guide element of the second linear guide is connected to the second carriage;
**characterized in that**
the first linear guide and the second linear guide are configured as slotted guides, wherein the first guide elements of the first and the second linear guide are each guide rails in the form of a slot (246, 247) and the second guide elements of the first and the second linear guide are each sliding elements in the form of a sliding pin (248, 249),
wherein the slots (246, 247) slope relative to one another, and
wherein a linear guide is rotatably connected to the associated carriage or to the support structure, **in that** the sliding pin (249) of the linear guide is rotatably mounted in the slot (247) of the linear guide.

7. XY table according to Claim 6, wherein the slot (247) in which the rotatably configured sliding pin (249) is arranged is embodied as a curved slot.

8. XY table according to Claim 7, wherein the sliding pin (249) rotatably mounted in the curved slot is a bolt, preferably a roller.

9. Linear transport system comprising
a carriage guide rail (20) having an arc section, and a robot (100, 200) according to any one of Claims 1 to 5, wherein the first and the second XY table (40, 140, 240, 50, 150) are in each case an XY table according to any one of Claims 6 to 8.

10. Linear transport system according to Claim 9, wherein the carriage guide rail (20) forms a closed path.

11. Linear transport system according to Claim 9 or 10, wherein the carriage guide rail (20) is arranged on a stator (11), which has an in-series arrangement of individually energizable coils (13), and
wherein the carriages (41, 141, 241, 42, 142, 242, 51, 151, 52, 152) each comprise at least one permanent magnet (33), which is designed to interact with the magnetic field formed by the in-series arrangement of individually energizable coils.

## Revendications

1. Robot pour un système de transport linéaire comprenant un rail de guidage de chariots (20), comprenant
des chariots (41, 141, 241, 42, 142, 242, 51, 151, 52, 152) qui sont disposés de manière mobile indépendamment les uns des autres sur le rail de guidage de chariots, et
des systèmes de bras (60, 160, 70, 170) qui sont reliés l'un à l'autre par le biais d'un système d'articulation (80, 180), et
un outil de travail (90) qui est relié au système d'articulation,
**caractérisé par**
une première et une deuxième table XY (40, 140, 240, 50, 150) comprenant respectivement
un premier et un deuxième chariot (41, 141, 241, 42, 142, 242, 51, 151, 52, 152), et
un premier et un deuxième guidage linéaire (54, 154, 55, 155, 246, 247, 248, 249) qui comprennent respectivement un premier et un deuxième élément de guidage qui sont déplaçables l'un par rapport à l'autre le long d'une trajectoire,
le premier et le deuxième guidage linéaire étant réalisés de manière à présenter un décalage angulaire l'un par rapport à l'autre,
les premiers éléments de guidage du premier et du deuxième guidage linéaire étant reliés par le biais d'une structure de support (43, 143, 243, 53, 153), et
le deuxième élément de guidage du premier guidage linéaire étant relié au premier chariot et le deuxième élément de guidage du deuxième guidage linéaire étant relié au deuxième chariot ; et
un premier système de bras (60, 160) qui est relié à la structure de support de la première table XY par le biais d'une première articulation (65, 146), et un deuxième système de bras (70, 170) qui est relié à la structure de support de la deuxième table XY par le biais d'une deuxième articulation (75, 156).

2. Robot selon la revendication 1, dans lequel la première articulation (146) est montée de manière rotative sur la structure de support (143) de la première table XY (140) et la deuxième articulation (156) est montée de manière rotative sur la structure de support (153) de la deuxième table XY (150).

3. Robot selon la revendication 1 ou 2,
dans lequel le premier et le deuxième système de bras (60, 70) sont réalisés respectivement sous forme d'objet bidimensionnel formant une surface, le système d'articulation (80) comprenant une première articulation pour la liaison au premier système de bras et une deuxième articulation pour la liaison au deuxième système de bras, dans lequel la première articulation et la deuxième articulation sont reliées l'une à l'autre par le biais d'un dispositif d'accouplement (82, 83).

4. Robot selon la revendication 3, dans lequel le dispositif d'accouplement est un engrenage (82, 83).

5. Robot selon la revendication 1 ou 2,
dans lequel le premier et le deuxième système de bras (160, 170) sont réalisés respectivement sous forme d'objet tridimensionnel qui comprend respectivement une liaison en trois points avec le système d'articulation (180) et la structure de support (143, 153) de la table XY (140, 150) associée.

6. Table XY pour un robot selon l'une quelconque des revendications 1 à 5, conçue pour se déplacer le long d'un rail de guidage de chariots (20), qui comprend une partie arquée, comprenant un premier et un deuxième chariot (41, 141, 241, 42, 142, 242, 51, 151, 52, 152) qui sont disposés de manière mobile indépendamment l'un de l'autre sur le rail de guidage de chariots, et
un premier et un deuxième guidage linéaire (54, 154, 55, 155, 246, 247, 248, 249) qui comprennent respectivement un premier et un deuxième élément de guidage qui sont déplaçables l'un par rapport à l'autre le long d'une trajectoire,
le premier et le deuxième guidage linéaire étant réalisés de manière à présenter un décalage angulaire l'un par rapport à l'autre,
les premiers éléments de guidage du premier et du deuxième guidage linéaire étant reliés par le biais d'une structure de support (43, 143, 243, 53, 153), le deuxième élément de guidage du premier guidage linéaire étant relié au premier chariot et le deuxième élément de guidage du deuxième guidage linéaire étant relié au deuxième chariot, **caractérisée en ce que**
le premier guidage linéaire et le deuxième guidage linéaire sont réalisés sous forme de guidages à coulisse, les premiers éléments de guidage du premier et du deuxième guidage linéaire étant respectivement des rails de guidage se présentant sous la forme d'une rainure (246, 247) et les deuxièmes éléments de guidage du premier et du deuxième guidage linéaire étant respectivement des éléments coulissants se présentant sous la forme d'une tige de coulisse (248, 249),
les rainures (246, 247) étant inclinées l'une par rapport à l'autre, et
un guidage linéaire étant relié de manière rotative au chariot associé, ou à la structure de support, du fait que la tige de coulisse (249) du guidage linéaire est montée de manière rotative dans la rainure (247) du guidage linéaire.

7. Table XY selon la revendication 6, dans laquelle la rainure (247), dans laquelle la tige de coulisse (249) conçue de manière rotative est disposée, est réalisée de manière incurvée.

8. Table XY selon la revendication 7, dans laquelle la tige de coulisse (249) montée de manière rotative dans la rainure incurvée est un boulon, de préférence un galet.

9. Système de transport linéaire comportant un rail de guidage de chariots (20) comprenant une partie arquée, et
un robot (100, 200) selon l'une quelconque des revendications 1 à 5, dans lequel la première et la deuxième table XY (40, 140, 240, 50, 150) sont respectivement une table XY selon l'une quelconque des revendications 6 à 8.

10. Système de transport linéaire selon la revendication 9, dans lequel le rail de guidage de chariots (20) forme une trajectoire fermée.

11. Système de transport linéaire selon la revendication 9 ou 10,
dans lequel le rail de guidage de chariots (20) est disposé sur un stator (11) qui comprend un agencement en série de bobines (13) pouvant être alimentées individuellement en courant, et
dans lequel les chariots (41, 141, 241, 42, 142, 242, 51, 151, 52, 152) comportent respectivement au moins un aimant permanent (33) qui est conçu pour interagir avec le champ magnétique formé par l'agencement en série de bobines pouvant être alimentées individuellement en courant.
